# EUROPÄISCHE PATENTSCHRIFT

(11) **EP 1 238 136 B1**
(45) Veröffentlichungstag und Bekanntmachung des Hinweises auf die Patenterteilung: **27.08.2003**
(21) Anmeldenummer: 00979522.0
(22) Anmeldetag: 30.10.2000
(51) Int. Cl.: D06M 15/41, D06M 13/184, D06M 13/256, D06M 13/165, D06M 13/17, D06P 1/56, D06P 1/653, D06P 1/651, D06P 1/613, D06P 1/62, C09D 17/00, C14C 3/18

(54) **AROMATISCHE FORMALDEHYD-KONDENSATIONSPRODUKTE ENTHALTENDE SÄURESTABILE LÖSUNGEN**
ACID-RESISTANT SOLUTIONS CONTAINING AROMATIC FORMALDEHYDE CONDENSATION PRODUCTS
SOLUTIONS STABLES A L'ACIDE QUI CONTIENNENT DES PRODUITS AROMATIQUES DE CONDENSATION DE FORMALDEHYDE

(30) Priorität: 10.11.1999 DE 19954013
(43) Veröffentlichungstag der Anmeldung: 11.09.2002
(73) Patentinhaber: Bayer Aktiengesellschaft, 51368 Leverkusen (DE)
(72) Erfinder: GERLE, Michael, 50127 Bergheim (DE); WALZ, Klaus, 51381 Leverkusen (DE); EHLERT, Hans Albert, Singapore 629844 (SG); HEINEN, Ralf, 50737 Köln (DE)
(86) Internationale Anmeldenummer: EP0010653
(87) Internationale Veröffentlichungsnummer: WO01034898

(56) Entgegenhaltungen:
- US-A- 4 302 202
- DATABASE WPI Section Ch, Week 198921 Derwent Publications Ltd., London, GB; Class A23, AN 1989-157418 XP002163394 & SU 1 435 671 A (KAUN POLY), 7. November 1988 (1988-11-07)

## Beschreibung

Die vorliegende Erfindung betrifft säurestabile wässrige Lösungen, die Sulfonatund/oder Carboxylatgruppen aufweisende aromatische Formaldehyd-Kondensationsprodukte und geeignete Zusatzstoffe enthalten, deren Herstellung und deren Verwendung als Egalisiermittel, Dispergiermittel oder Echtheitsverbesserungsmittel in der Textilausrüstung, als Gerbstoffe für Leder und bei der Fleckfreiausrüstung von Textilmaterialien.

Wasserlösliche aromatische Formaldehyd-Kondensationsprodukte sind an sich bekannt (siehe Ullmanns Enzyklopädie der technischen Chemie Bd. 16 (1979), S. 140) und können nach Verfahren hergestellt werden, wie sie beispielsweise in Houben-Weyl: "Methoden der organischen Chemie" G. Thieme Verlag Stuttgart (1963), 14(2), 263-292, DE-OS 1 960 616, DE-OS 1 961 369 und DE 39 05 083 A1 beschrieben sind.

Die in DE-OS 1 960 616 und DE 39 05 083 A1 beschriebenen aromatischcn Formaldehyd-Kondensationsprodukte sind gut wirksame Mittel zur Verbesserung der Nassechtheiten von mit anionischen und/oder kationischen Farbstoffen gefärbten Textilien. Sie können ferner zur Reservierung von Polyamiden gegenüber Direktfarbstoffen beim Färben von Polyamid/Cellulosefaser-Mischungen eingesetzt werden. Nachteilig ist bei diesen Produkten die Tatsache, dass sie im sauren pH-Bereich nicht stabil sind und Ausfällungen zeigen. Bei vielen Anwendungen ist jedoch eine Säurestabilität der Produkte selber und nach Verdünnung in Wasser wünschenswert, um eine breite und universelle Anwendbarkeit zu erzielen. Führt man zur Verbesserung der Säurestabilität weitere ionische Gruppen in die Produkte ein, verschlechtert sich die Wirksamkeit der Kondensationsprodukte.

Die Aufgabe der vorliegenden Erfindung bestand somit darin, säurestabile wässrige Lösungen von aromatischen Formaldehyd-Kondensationsprodukten zur Verfügung zu stellen. Es wurde nun überraschend gefunden, dass durch Kombination von aromatischen Formaldehyd-Kondensationsprodukte mit geeigneten Hilfsmitteln säurestabile wässrige Lösungen erhalten werden können, die sich gleichzeitig durch eine gute Wirksamkeit bei den verschiedensten Anwendungen im Textil- und Lederbereich auszeichnen.

Gegenstand der Erfindung ist eine wässrige Lösung einer Mischung enthaltend
- (A) 5-50 Gew. %: mindestens eines Sulfonat- und/oder Carboxylatgruppen enthaltenden aromatischen Formaldehyd-Kondensationsprodukts,
- (B) 2-30 Gew.%: mindestens einer aliphatischen Carbonsäure,
- (C) 1-20 Gew.%: mindestens einer aromatischen Sulfonsäure und
- (D) 1-15 Gew.%: mindestens eines Lösungsmittels der Formel (I)

R¹O(CH₂CHR³O)ₙR², (I)
wobei R¹ und R² unabhängig voneinander für H, geradkettiges oder verzweigtes C₁-C₆-Alkyl, Phenyl oder C₁-C₄-Acyl stehen, R³ für H oder CH₃ steht und n eine ganze Zahl von 1 bis 10 ist,
und sich die für die Komponenten (A) bis (D) angegebenen Gew.% jeweils auf die gesamte wässrige Lösung beziehen.

Die erfindungsgemäßen Mischungen zeichnen sich durch eine exzellente Säurestabilität aus. Ausfällungen, wie sie mit wässrigen Lösungen von Formaldehyd-Kondensationsprodukten des Standes der Technik gemäß DE-OS 1 960 616, DE-OS 1 961 369 und DE 39 05 083 A1 auftreten, werden nicht beobachtet.

Bewährt haben sich wässrige Lösungen einer Mischung enthaltend
- (A) 5-50 Gew. %,: bevorzugt 10-40 Gew.% und insbesondere 20-30 Gew.% mindestens eines Sulfonat- und/oder Carboxylatgruppen enthaltenden aromatischen Formaldehyd-Kondensations-produkts,
- (B) 2-30 Gew.%,: bevorzugt 4-15 Gew.% und insbesondere 5-10 Gew.% mindestens einer aliphatischen Carbonsäure,
- (C) 1-20 Gew.%,: bevorzugt 2-10 Gew.% und insbesondere 3-5 Gew.% mindestens einer aromatischen Sulfonsäure und
- (D) 1-15 Gew.%,: bevorzugt 2-10 Gew.% und insbesondere 3-7 Gew.% mindestens eines Lösungsmittels der Formel (I)

R¹O(CH₂CHR³O)ₙR², (I)
wobei R¹ und R² unabhängig voneinander für H, geradkettiges oder verzweigtes C₁-C₆-Alkyl, Phenyl oder C₁-C₄-Acyl stehen, R³ für H oder CH₃ steht und n eine ganze Zahl von 1 bis 10 ist,
und wobei sich die für die Komponenten (A) bis (D) angegebenen Gew.% jeweils auf die gesamte wässrige Lösung beziehen.

Unter dcn Sulfonat- und/oder Carboxylatgruppen enthaltenden Formaldehyd-Kondensationsprodukten (A) werden oligomere oder polymere Produkte verstanden, die durch Kondensation von einer oder mehreren kondensationsfähigen aromatischen und gegebenenfalls nichtaromatischen Verbindungen mit Formaldehyd erhältlich sind, wobei mindestens eine der aromatischen Verbindungen mindestens eine Sulfonat- und/oder Carboxylatgruppe enthalten muss, oder bei denen die Sulfonatgruppen während oder nach der Kondensation eingeführt werden. Diese Sulfonatund/oder Carboxylatgruppen enthaltenden Formaldehyd-Kondensationsprodukte sind wasserlöslich.

Zur Herstellung dieser Formaldehyd-Kondensationsprodukte sind eine Vielzahl kondensationsfähiger aromatischer Verbindungen geeignet, wie z.B. Benzol- und Naphthalinderivate, die ein oder mehrere, bevorzugt 1 oder 2 Substituenten tragen können, wobei diese Substituenten ausgewählt sind aus der Gruppe der C₁-C₄-Alkyl-, Hydroxy-, C₅-C₁₁-Cycloalkyl, C₁-C₄-Alkoxy-, C₁-C₄-Hydroxyalkoxy-, C₆-C₁₂-Aroxy-, C₇-C₁₃-Aralkoxy-, Carboxy-, C₁-C₆-Alkoxycarbonyl-, Sulfonat-, C₆-C₁₂-Arylsulfonyl und C₆-C₁₂-Hydroxyarylsulfonyl-Reste.

Beispielhaft seien als kondensationsfähige aromatische Verbindungen genannt: Xylol, Mesitylen, Phenol, Kresole, Xylenole, Butylphenol, Cyclohexylphenol, Anisol, Phenoxyethanol, Phenoxypropanol, Phenoxyessigsäure, Phenolsulfonsäure, Anisolsulfonsäure, Diphenylether, Ditolylether, 4,4'-Dihydroxydiphenylsulfon, 2,2-Bis-(4-hydroxyphenyl)propan, 4-Hydroxydiphenylsulfon, Bis-(hydroxyethoxyphenyl)sulfone, Salicylsäure, 4-Hydroxybenzoesäure, Naphthalin, Naphthole, Isobutylnaphthaline, Naphtholsulfonsäuren, Naphthylmethylether, Diphenyl-sulfonsäuren und sulfoniertes 4,4'-Dihydroxydiphenylsulfon.

Neben den kondensationsfähigen aromatischen Verbindungen können für die Herstellung der Formaldehyd-Kondensationsprodukte auch noch zusätzlich nichtaromatische kondensationsfähige Verbindungen eingesetzt werden, wie z.B. Harnstoff, Thioharnstoff, Ethylenharnstoff, Ethylenthiohamstoff und/oder Melamin.

Bevorzugte Formaldehydkondensationsprodukte sind solche, die durch gemeinsame Kondensation von 4,4'-Dihydroxydiphenylsulfon und Phenolsulfonsäure und/oder Diphenylsulfonsäure und/oder 4,4'-Dihydroxydiphenylsulfonsäure und/oder Ditolylethersulfonsäure und/oder Naphthalinsulfonsäuren und/oder Hydroxybenzoesäuren mit Formaldehyd hergestellt werden.

Besonders bevorzugte Kondensationsprodukte erhält man durch gemeinsame Kondensation von a) 4,4'-Dihydroxydiphenylsulfon und b) Phenolsulfonsäure mit c) Formaldehyd. Hierbei werden a), b) und c) in einem molaren Verhältnis von 1: (0.25-2,5): (0,75-3,5) eingesetzt.

Die Herstellung der erfindungsgemäß einzusetzenden Formaldehyd-Kondensationsprodukte kann in der Weise erfolgen, dass man die kondensationsfähigen aromatischen und gegebenenfalls nichtaromatischen Verbindungen, wobei mindestens eine der aromatischen Verbindungen mindestens eine Sulfonat- und/oder Carboxylatgruppe enthält, in saurem oder alkalischem Medium bei Temperaturen von 100-200°C mit Formaldehyd zu höhermolekularen Kondensationsprodukten umsetzt. Formaldehyd kann dabei in Form wässriger Lösungen oder als Paraformaldehyd eingesetzt werden. Anstelle von Formaldehyd kann man auch in-situ Formaldehyd freisetzende Verbindungen wie Hexamethylentetramin verwenden.

Wenn die kondensationsfähigen aromatischen Verbindungen nicht bereits Sulfonatgruppen als Substituenten tragen, kann die Einführung von Sulfonatgruppen in die Formaldehydkondensationsprodukte auch noch vor, während oder nach der Kondensation in üblicher Weise erfolgen, beispielsweise durch Umsetzung mit Schwefeltrioxid, Schwefelsäure, Chlorsulfonsäure, Amidosulfonsäure oder Umsetzung mit Formaldehyd und Sulfiten oder Bisulfiten.

Es ist ferner möglich, während und/oder nach der Kondensationsreaktion reduzierend wirkende Mittel zuzusetzen, wie dies in EP-A-0 474 075 beschrieben ist. Als reduzierend wirkende Mittel können übliche, bei chemischen Reaktionen einsetzbare Reduktionsmittel verwendet werden. Geeignet sind z.B. Wasserstoff, aktivierter Wasserstoff, Metallhydride wie Natriumhydrid, Natriumborhydrid oder Lithiumaluminiumhydrid, reduzierend wirkende Schwefelverbindungen wie Sulfite, Bisulfite, Hydrosulfite, Pyrosulfite, Dithionite, Thiosulfate, Sulfoxylate, Hydroxymethansulfinate, Sulfinate oder Thioharnostoffdioxid, reduzierend wirkende Phosphorverbindungen wie phosphorige Säure, hypophosphorige Säure oder deren Salze sowie organische Reduktionsmittel wie Glucose, Gluconsäure oder Hydroxyaceton. Die eingesetzten Mengen an reduzierend wirkenden Mitteln betragen, bezogen auf das fertige Kondensationsprodukt, 0,1-20 Gew.% und vorzugsweise 0,5-10 Gew.%.

Als aliphatische Carbonsäuren (B) können aliphatische, geradkettige oder verzweigte, gesättigte oder ungesättigte Carbonsäuren eingesetzt werden, die eine oder mehrere, bevorzugt 1, 2, 3 oder 4 Carboxylgruppen aufweisen. Gegebenenfalls können diese aliphatischen Carbonsäuren (B) durch eine oder mehrere, bevorzugt 1 oder 2, weitere funktionelle Gruppen substituiert sein, wobei diese funktionellen Gruppen ausgewählt sind aus der Gruppe der Nitro-, Amino-, Hydroxy-, Phosphono-(-PO(OH)₂) und geradkettigen oder verzweigten C₁-C₄-Alkylreste.

Geeignet sind beispielsweise gesättigte C₁-C₆-, bevorzugt C₁-C₃-Monocarbonsäuren wie Ameisensäure, Essigsäure oder Propionsäure. Besonders bevorzugt ist Essigsäure.

Als gesättigte Dicarbonsäuren haben sich ferner Oxalsäure, Malonsäure, Bemsteinsäure, Glutarsäure und Adipinsäure bewährt.

Als ungesättigte Dicarbonsäuren können beispielsweise Maleinsäure oder Fumarsäure eingesetzt werden.

Als aliphatische substituierte Mono-, Di- oder Tricarbonsäuren können Milchsäure, Äpfelsäure, Weinsäure oder Citronensäure eingesetzt werden.

Als aliphatische gesättigte Tri- und Tetracarbonsäuren haben sich Propantricarbonsäure und Butantetracarbonsäure bewährt.

Ferner können Nitrilotriessigsäure (NTA), Ethylendiamintetraessigsäure (EDTA), 1,2- oder 1,3-Propylendiamintetraessigsäure, Diethylentriamin-N,N',N "-pcntaessigsäure, N-Hydroxyethylendiamintriessigsäure, Glycin-N,N-diessigsäure, Asparagin-N,N-diessigsäure, Ethylendiamindisuccinat, Ethylendiaminmonosuccinat oder Polyaminopolycarbonsäuren eingesetzt werden.

Auch Phosphonocarbonsäuren wie z.B. 2-Phosphonobutan-1,2,4-tricarbonsäure haben sich bewährt.

Als aromatische Sulfonsäuren (C) haben sich aromatische C₆-C₁₂-Sulfonsäuren bewährt, die ein oder mehrere, bevorzugt 1 oder 2 Sulfonsäuregruppen aufweisen. Diese aromatischen Sulfonsäuren (C) können einen oder mehrere, bevorzugt 1 oder 2 weitere Substituenten tragen ausgewählt aus der Gruppe der Amino-, Hydroxy- und C₁-C₄-Alkyl-Reste. Geeignet sind beispielsweise Benzolsulfonsäure, Toluolsulfonsäure, Phenolsulfonsäure, Aminobenzolsulfonsäure, Naphthalinsulfonsäure und Benzoldisulfonsäure. Besonders bevorzugt ist Toluolsulfonsäure.

Die erfindungsgemäßen wässrigen Lösungen enthalten 1-15 Gew.%, bevorzugt 2-10 Gew.% und insbesondere 3-7 Gew.% mindestens eines Lösungsmittels der Formel (I)

R¹O(CH₂CHR³O)ₙR², (I)

wobei R¹ und R² unabhängig voneinander für H, geradkettiges oder verzweigtes C₁-C₆-Alkyl, Phenyl oder C₁-C₄-Acyl stehen, R³ für H oder CH₃ steht und n eine ganze Zahl von 1 bis 10 ist.

Bevorzugt stehen R¹ und R² unabhängig voneinander für Wasserstoff, Methyl, Ethyl, n-Propyl, i-Propyl, n-Butyl, i-Butyl, tert. Butyl, n- oder iso-Pentyl, n- oder iso-Hexyl oder Acetat. R³ steht bevorzugt für CH₃. n ist bevorzugt gleich 1, 2 oder 3. Besonders bevorzugt ist R¹ = H, R² und R³ stehen für Methyl und n = 1.

Beispiele für geeignete Lösungsmittel im Sinne von Formel (1) sind die nachfolgend aufgeführten (Poly)-alkylenglykole, deren Mono- oder Dialkylether, deren Monooder Diacylester sowie deren Monoalkylethermonoacylester:
- Polyethylenglykole wie Ethylenglykol, Diethylenglykol, Triethylenglykol und höhere Ethylenglykole,
- Ethylenglykolmonoalkyl- oder arylether wie Ethylenglykolmonomethylether, Ethylenglykolmonoethylether, Ethylenglykol-monopropylether, Ethylenglykolmonobutylether, Ethylenglykolmonon-hexyl-ether, Ethylenglykolmonophenylether,
- Ethylenglykoldialkylether
   Ethylenglykoldimethylether, Ethylenglykoldiethylether, Ethylenglykol-dipropylether, Ethylenglykoldibutylether,
- Ethylenglykolmono- und diacylester wie
   Ethylenglykolmonoacetat, Ethylenglykoldiacetat
- Ethylenglykolmonoalkylethermonoacylester wie
   Ethylenglykolmonomethyletheracetat, Ethylenglykolmonoethyletheracetat, Ethylenglykolmonobutyletheracetat,
- Diethylenglykolmonoalkylether wie
   Diethylenglykolmonomethylether, Diethylenglykolmonoethylether, Diethylenglykolmonobutylether,
- Diethylenglykoldialkylether wie
   Diethylenglykoldimethylether, Diethylenglykoldiethylether, Diethylenglykoldibutylether,
- Diethylenglykolmonoalkylmonoacylester wie
   Diethylenglykolmonomethyletheracetat, Diethylenglykolmonoethyletheracetat, Diethylenglykolmonobutyletheracetat,
- Triethylenglykolmonoalkylether wie
   Triethylenglykolmonomethylether, Triethylenglykolmonoethylether, Triethylenglykolmonobutylether,
- Triethylenglykoldialkylether wie
   Triethylenglycoldimethylether,
- (Poly)propyienglykole wie
   Propylenglykol, Dipropylenglykol, Tripropylenglykol und höhere Propylenglykole,
- (Poly)propylenglykolmonoalkylether wie
   Propylenglykolmonomethylether, Dipropylenglykolmonomethylether.

Besonders bevorzugt wird Propylenglykolmonomethylether eingesetzt.

Neben den Komponenten (A) - (D) können die erfindungsgemäßen Lösungen gegebenenfalls auch noch weitere Hilfsmittel enthalten.

Zur Regulation des pH-Wertes werden beispielsweise anorganische Säuren wie Schwefelsäure, Salzsäure, Phosphorsäure oder Salpetersäure zugesetzt.

Weiler können als Hilfsmittel oberflächenaktive Substanzen und/oder Dispergicrmittel eingesetzt werden. Als oberflächenaktive Substanzen sind beispielsweise geeignet: Alkylbenzolsulfonate mit mindestens 5, bevorzugt mindestens 9 C-Atomen in der Alkylkette, Alkansulfonate, Olefinsulfonate, Alkyl-(aryl-)polyalkylenglykolethersulfonate, Estersulfonate, Sulfosuccinate, Ricinusölsulfonate, Alkylsulfate, Alkylpolyalkylenglycolethersulfate, Alkyl-(aryl-)polyalkylenglykolethercarboxylate, Alkyl-(aryl)-phosphorsäureester, Alkyl-(aryl)-polyalkylenglycoletherphosphorsäureester, Glyceridsulfate, Acylisothionate, Acyltaurine, Acylsarkosinate, Alkyl-(aryl-)polyalkylenglycolether, endgruppenverschlossene Alkyl-(aryl-)polyalkylenglycolether, Phenolpolyalkylenglycolether, Acylalkanolamidpolyalkylenglykolether, alkoxylierte Butindiolderivate, Acylpolyalkylenglycolester, Alkylaminpolyalkylenglycolether, Ethylenoxid-Proylenoxid-Blockcopolymere, Alkylpolyglycoside, Acylglucamide, (ethoxylierte) Sorbitanester, quarternierte Alkylamine, Alkylaminoxide, Alkylbetaine, Alkylamidobetaine, Imidazoliniumbetaine oder Sulfobetaine.

Als Dispergiermittel seien beispielsweise genannt: Polyasparaginsäuren, n-Alkylpolyasparaginsäuren, Ligninsulfonate, Carboxymethylcellulosen, Hydroxyethylcellulosen, Hydroxypropylcellulosen, modifizierte Stärken, Polyacrylsäuren, Maleinsäure/Acrylsäure-Copolymerisate, Maleinsäure/Olefin-Copolymerisate, Polyvinylalkohol, Polyvinylpyrrolidon, Vinylpyrrolidon/Vinylacetat-Copolymerisate, Vinylpyrrolidon/Vinylimidazol-Copolymerisate, Vinylpyrrolidon/Acrylat-Copolymerisate oder Vinylpyrrolidon/Vinylcaprolactam-Copolymerisate.

Den erfindungsgemäßen Lösungen können auch die im Bereich der Textilausrüstung gängigen Stellmittel wie Harnstoff oder Natriumsulfat zugesetzt werden.

Die erfindungsgemäßen wässrigen Lösungen können einen Wassergehalt von 0-90 Gew.% bezogen auf die gesamte wässrige Lösung aufweisen. Bevorzugt liegt der Wassergehalt bei 10-70 Gew.% und insbesondere bei 30-60 Gew.%.

Die Herstellung der erfindungsgemäßen wässrigen Lösungen erfolgt durch Mischen der Komponenten (A) bis (D), gegebenenfalls weiterer Hilfsmittel sowie Wasser in beliebiger Reihenfolge. In einer bevorzugten Ausführungsform wird zunächst Komponente (A) vorgelegt und mit Wasser verdünnt. Anschließend werden nacheinander die Komponenten (D), (B) und (C) zugegeben.

Die erfindungsgemäß hergestellten wässrigen Lösungen eignen sich zum Einsatz in den unterschiedlichsten industriellen Bereichen.

Gegenstand der Erfindung ist die Verwendung der erfindungsgemäßen wässrigen Lösungen als Egalisiermittel beim Färben von Fasern oder daraus hergestellten Textilmaterialien. Bevorzugt werden die erfindungsgemäßen wässrigen Lösungen beim Färben von synthetischen Fasern oder Textilmaterialien mit anionischen Farbstoffen eingesetzt. In diesem Fall werden die wässrigen Lösungen der Färbeflotte selber zugesetzt.

Ein weiterer Gegenstand der Erfindung ist die Verwendung der erfindungsgemäßen wässrigen Lösungen zur Verbesserung der Echtheiten von gefärbten Fasern oder daraus hergestellten Textilmaterialien. Hierbei werden die erfindungsgemäßen wässrigen Lösungen zur Nachbehandlung von mit anionischen und/oder kationischen Farbstoffen gefärbten Fasern oder daraus hergestellten Textilmaterialien, bevorzugt Polyamiden, insbesondere synthetischen Polyamiden, eingesetzt. Diese Nachbehandlung der gefärbten Fasern oder daraus hergestellten Textilmaterialien kann sowohl nach dem Klotzverfahren als auch nach dem Ausziehverfahren erfolgen. Der Zusatz der erfindungsgemäßen wässrigen Lösung erfolgt nach der Färbung in ein Spül- oder weiteres Ausrüstungsbad und führt zur Verbesserung der Nassechtheiten der Färbungen auf den gefärbten Fasern bzw. Textilmaterialien. Die erfindungsgemäßen wässrigen Lösungen eignen sich dabei sowohl zur Nachbehandlung von Färbungen, die mit anionischen Farbstoffen erzeugt wurden, wie z.B. mit Azo-, Anthrachinon-, Triphenylmethan-, Azin-, Xanthen- oder Nitrofarbstoffen, insbesondere mit den sogenannten sauren Wollfarbstoffen der Azo- und Anthrachinonreihe, als auch für Färbungen, die mit kationischen Farbstoffen erhalten wurden, z.B. mit Diphenylmethan-, Triphenylmethan-, Rhodamin-, Thiazin-, Oxazin-, Methinund Azofarbstoffen mit basischer bzw. quaternierter Aminogruppe. Als synthetische, mit anionischen Farbstoffen färbbare Polyamide seien insbesondere Polyhexamethylendiaminadipat (PA 6,6), Poly-ε-caprolactam (PA 6), und Poly-ω-aminoundecansäure (PA 12) genannt. Als mit kationischen Farbstoffen färbbare Polyamide seien ferner die entsprechend anionisch modifizierten Polyamide genannt.

Gegenstand der Erfindung ist ferner die Verwendung der erfindungsgemäßen wässrigen Lösungen in der Fleckfreiausrüstung von Textilmaterialien, bevorzugt von synthethischen Textilmaterialien und insbesondere von synthetischen Polyamid-Teppichen. Hierbei werden die Textilmaterialien nach dem Färbevorgang mit den erfindungsgemäßen wässrigen Lösungen behandelt.

Gegenstand der Erfindung ist ferner die Verwendung der erfindungsgemäßen wässrigen Lösungen als Gerbstoffe für Leder.

Gegenstand der Erfindung ist ferner die Verwendung der erfindungsgemäßen wässrigen Lösungen als Dispergiermittel für wasserunlösliche Feststoffe, bevorzugt für Farbstoffe, Pigmente oder Agrochemikalien. Hierbei wird eine wässrige Dispersion oder Suspension der wasserunlöslichen Feststoffe mit der erfindungsgemäßen wässrigen Lösung versetzt.

### Beispiele:

### Beispiel A1:

28,15 kg technisches 4,4'-Dihydroxydiphenylsulfon, 16,74 kg technische Phenolsulfonsäure (65 %ig in Wasser), 15,39 kg 30 %ige Natronlauge und 27,53 kg Wasser werden bei 80°C in einem Druckgefäß vermischt. Nach Zugabe von 12,19 kg 30%iger Formaldehydlösung und Verschließen des Behälters wird unter Rühren auf 120°C erhitzt und 5 Stunden kondensiert. Nach dem Abkühlen erhält man ein dunkelbraunes viskoses Produkt.

### Beispiel A2:

29,78 kg technisches 4,4'-Dihydroxydiphenylsulfon, 15,93 kg technische Phenolsulfonsäure (65 %ig in Wasser), 15,40 kg 30 %ige Natronlauge und 26,47 kg Wasser werden bei 80°C in einem Druckgefäß vermischt. Nach Zugabe von 12,41 kg 30%iger Formaldehydlösung und Verschließen des Behälters wird unter Rühren auf 120°C erhitzt und 5 Stunden kondensiert. Nach dem Abkühlen erhält man ein dunkelbraunes viskoses Produkt.

### Beispiel A3:

30,69 kg technisches 4,4'-Dihydroxydiphenylsulfon, 14,95 kg technische Phenolsulfonsäure (65 %ig in Wasser), 14,68 kg 30 %ige Natronlauge und 27,28 kg Wasser werden bei 80°C in einem Druckgefäß vermischt. Nach Zugabe von 12,41 kg 30%iger Formaldehydlösung und Verschließen des Behälters wird unter Rühren auf 120°C erhitzt und 5 Stunden kondensiert. Nach dem Abkühlen erhält man ein dunkelbraunes viskoses Produkt.

### Beispiel A4:

32,74 kg technisches 4,4'-Dihydroxydiphenylsulfon, 12,00 kg technische Phenolsulfonsäure (65 %ig in Wasser), 13,92 kg 30 %ige Natronlauge und 29,10 kg Wasser werden bei 80°C in einem Druckgefäß vermischt. Nach Zugabe von 12,24 kg 30%iger Formaldehydlösung und Verschließen des Behälters wird unter Rühren auf 120°C erhitzt und 5 Stunden kondensiert. Nach dem Abkühlen erhält man ein dunkelbraunes viskoses Produkt.

Die nach den Beispielen A1-A4 erhaltenen Produkte zeigen nach Einstellung auf einen pH-Wert <5 mit anorganischen Säuren wie Schwefelsäure oder organischen Säuren wie Essigsäure und Verdünnen mit Wasser Ausfällungen. Sie sind also nicht säurestabil. Aus diesem Grund kann keine Messung der echtheitsverbessernden Wirkung der Produkte im geforderten sauren pH-Bereich erfolgen. Zum Vergleich der Wirksamkeit mit den erfindungsgemäßen säurestabilen Produkten wird ein nicht säurestabiles Produkt mit gleichem Wirkstoffgehalt hergestellt, allerdings nicht auf einen pH-Wert <5 eingestellt.

### Beispiel VB1 (Vergleich):

59,80 kg des Produkts aus Beispiel A4 werden unter Rühren auf 40°C erhitzt und 40,20 kg Wasser zugesetzt. Das erhaltene schwach alkalische Produkt ist in Wasser löslich, allerdings nicht säurestabil.

Zum Nachweis der Wirksamkeit der erfindungsgemäßen Kombination der Komponenten (A), (B), (C) und (D) werden zum Vergleich Mischungen des Kondensationsproduktes aus Beispiel A4) mit der Hilfsmittelkombination unter Verzicht auf ein oder zwei Komponenten hergestellt:

### Beispiel VB2 (Vergleich):

59,80 kg des Produkts aus Beispiel A4 werden unter Rühren auf 40°C erhitzt und nacheinander 36,47 kg Wasser sowie 3,73 kg Toluolsulfonsäure zugesetzt. Das erhaltene Produkt zeigt bereits nach dem Lösen in Wasser Ausfällungen und kann daher nicht zur Messung der echtheitsverbessernden Wirkung verwendet werden.

### Beispiel VB3 (Vergleich):

59,80 kg des Produkts aus Beispiel A4 werden unter Rühren auf 40°C erhitzt und nacheinander 31,70 kg Wasser sowie 8.50 kg Eisessig zugesetzt. Das erhaltene Produkt zeigt bereits nach dem Lösen in Wasser feste Abscheidungen und kann daher nicht zur Messung der echtheitsverbessernden Wirkung verwendet werden.

### Beispiel VB4 (Vergleich):

59,80 kg des Produkts aus Beispiel A4 werden unter Rühren auf 40°C erhitzt und nacheinander mit 35,20 kg Wasser sowie 5,00 kg 1-Methoxy-2-propanol versetzt. Das erhaltene Produkt zeigt bereits nach dem Lösen in Wasser Abscheidungen und kann daher nicht zur Messung der echtheitsverbessernden Wirkung verwendet werden.

### Beispiel VB5 (Vergleich):

59,80 kg des Produkts aus Beispiel A4 werden unter Rühren auf 40°C erhitzt und nacheinander mit 26,70 kg Wasser, 5,0 kg 1-Methoxy-2-propanol sowie 8,5 kg Eisessig versetzt. Das erhaltene Produkt zeigt bereits nach dem Lösen in Wasser feste Abscheidungen und kann daher nicht zur Messung der echtheitsverbessernden Wirkung verwendet werden.

### Beispiel VB6 (Vergleich):

59,80 kg des Produkts aus Beispiel A4 werden unter Rühren auf 40°C erhitzt und nacheinander mit 31,47 kg Wasser, 5,0 kg 1-Methoxy-2-propanol sowie 3,73 kg p-Toluolsulfonsäure versetzt. Das erhaltene Produkt ist in Wasser löslich, zeigt aber eine deutlich schlechtere echtheitsverbessernde Wirkung als die nachfolgenden erfindungsgemäßen Produkte (siehe nachfolgende Prüfung der Nassechtheiten)

### Beispiel B1:

60,27 kg des Produkts aus Beispiel A1 wird unter Rühren auf 40°C erhitzt und nacheinander 24,30 kg Wasser, 3,60 kg 1-Methoxy-2-Propanol, 7,13 kg Eisessig sowie 3,2 kg p-Toluolsulfonsäure zugesetzt. Das erhaltene Produkt ist in Wasser löslich.

### Beispiel B2:

55,80 kg des Produkts aus Beispiel A2 wird unter Rühren auf 40°C erhitzt und nacheinander 29,57 kg Wasser, 3,60 kg 1-Methoxy-2-Propanol, 6,60 kg Eisessig sowie 2,93 kg p-Toluolsulfonsäure zugesetzt. Das erhaltene Produkt ist Wasser löslich.

### Beispiel B3:

57,60 kg des Produkts aus Beispiel A3 wird unter Rühren auf 40°C erhitzt und nacheinander 28,00 kg Wasser, 3,60 kg 1-Methoxy-2-Propanol, 6.43 kg Eisessig sowie 2,87 kg p-Toluolsulfonsäure zugesetzt. Das erhaltene Produkt ist in Wasser löslich.

### Beispiel B4:

55,80 kg des Produkts aus Beispiel A2 wird unter Rühren auf 40°C erhitzt und nacheinander 26,30 kg Wasser, 5,10 kg 1-Methoxy-2-Propanol, 8,87 kg Eisessig sowie 3,93 kg p-Toluolsulfonsäure zugesetzt. Das erhaltene Produkt ist in Wasser löslich.

### Beispiel B5:

59,80 kg des Produkts aus Beispiel A4 wird unter Rühren auf 40°C erhitzt und nacheinander 11,37 kg Wasser, 5,10 kg 1-Methoxy-2-Propanol, 16,43 kg Eisessig sowie 7,30 kg p-Toluolsulfonsäure zugesetzt. Das erhaltene Produkt ist in Wasser löslich.

### Beispiel B6:

59,80 kg des Produkts aus Beispiel A4 wird unter Rühren auf 40°C erhitzt und nacheinander 22,97 kg Wasser, 5,00 kg 1-Methoxy-2-Propanol, 8,50 kg Eisessig sowie 3,73 kg p-Toluolsulfonsäure zugesetzt. Das erhaltene Produkt ist in Wasser löslich.

### Beispiel B7:

59,80 kg des Produkts aus Beispiel A4 wird unter Rühren auf 40°C erhitzt und nacheinander 11,42 kg Wasser, 5,00 kg 1-Methoxy-2-Propanol, 8,50 kg Eisessig, 3,73 kg p-Toluolsulfonsäure sowie 11,55 kg Harnstoff zugesetzt. Das erhaltene Produkt ist in Wasser löslich.

### Beispiel B8:

60,00 kg des Produkts aus Beispiel A4 wird unter Rühren auf 40°C erhitzt und nacheinander 12,77 kg Wasser, 5,00 kg 1-Methoxy-2-Propanol, 8,50 kg Eisessig, 10,00 kg Glutarsäure sowie 3,73 kg p-Toluolsulfonsäure zugesetzt. Das erhaltene Produkt ist in Wasser löslich.

### Beispiel B9:

60,00 kg des Produkts aus Beispiel A4 wird unter Rühren auf 40°C erhitzt und nacheinander 12,77 kg Wasser, 5,00 kg 1-Methoxy-2-Propanol, 8,50 kg Eisessig sowie 13,73 kg p-Toluolsulfonsäure zugesetzt. Das erhaltene Produkt ist klar in Wasser löslich.

### Beispiel B10:

60,00 kg des Produkts aus Beispiel A4 wird unter Rühren auf 40°C erhitzt und nacheinander 19,77 kg Wasser, 5,00 kg 1-Methoxy-2-Propanol, 8,50 kg Eisessig, 1,00 kg 98 %ige Schwefelsäure sowie 5,73 kg p-Toluolsulfonsäure zugesetzt. Das erhaltene Produkt ist in Wasser löslich.

### Prüfung der Nassechtheitsverbesserung:

Für die nachfolgende Prüfung der Nassechtheitsverbesserung können neben den Produkten der Beispiele B1-B10 von den Vergleichsbeispielen VB1 - VB6 nur die Produkte aus Beispiel VB1 und VB6 verwendet werden, da diese - wenn auch nicht säurestabil - zumindest in Wasser löslich sind, während alle anderen Produkte der Vergleichsbeispiele VB2-VB5 bereits beim Lösen in Wasser Ausfällungen zeigen.

Zur Feststellung der Verbesserung des Nassechtheitsniveaus von Färbungen auf Polyamid werden die jeweiligen Produkte auf ein mit 1,2 % Telon® Blau K-GGL (Handelsprodukt der Firma DyStar Textilfarben GmbH & Co. Deutschland KG) 200 % vorgefärbtes Polyamid-Material appliziert. Die Produkte werden dazu in der in Tabelle 1 angegebenen Konzentration in Wasser gelöst. Anschließend wird das Polyamid-Material zugegeben und auf dem Rollenbad von 25°C auf 70-75°C aufgeheizt. Nach dieser Behandlung wird das Material gespült, getrocknet und einer Prüfung auf Schweißechtheit alkalisch nach DIN 54019 unterzogen. Beurteilt wird das Anbluten von PA-Begleitmaterial über farbmetrische Messungen. Je höher die Echtheitsnote ist, umso höher ist die Echtheit.

**Tabelle 1:**

| eingesetzte wässrige Lösungen aus Beispiel | Konzentration | Echtheitsnote |
|---|---|---|
| VB1 | 2 % | 4,1 |
| VB1 | 3 % | 4,7 |
| VB6 | 2 % | 2,6 |
| VB6 | 3 % | 3,0 |
| B1 | 2 % | 4,0 |
| B1 | 3 % | 4,8 |
| B2 | 2 % | 4,5 |
| B2 | 3 % | 4,8 |
| B3 | 2 % | 4,6 |
| B3 | 3 % | 4,8 |
| B4 | 2 % | 3,3 |
| B4 | 3 % | 4,3 |
| B5 | 2 % | 4,2 |
| B5 | 3 % | 4,8 |
| B6 | 2 % | 4,2 |
| B6 | 3 % | 4,8 |
| B7 | 2 % | 4,4 |
| B7 | 3 % | 4,9 |
| B8 | 2 % | 4,1 |
| B8 | 3 % | 4,6 |
| B9 | 2 % | 4,0 |
| B9 | 3 % | 4,6 |
| B10 | 2 % | 3,1 |
| B10 | 3 % | 3,9 |

## Patentansprüche

1. Wässrige Lösung einer Mischung enthaltend
(A) 5-50 Gew.% mindestens eines Sulfonat-und/oder Carboxylatgruppen enthaltenden aromatischen Formaldehyd-Kondensationsprodukts,
(B) 2-30 Gew.% mindestens einer aliphatischen Carbonsäure,
(C) 1-20 Gew.% mindestens einer aromatischen Sulfonsäure und
(D) 1-15 Gew.% mindestens eines Lösungsmittels der Formel (I)
R¹O(CH₂CHR³O)ₙ-R², (I)
wobei R¹ und R² unabhängig voneinander für H, geradkettiges oder verzweigtes C₁-C₆-Alkyl, Phenyl oder C₁-C₄-Acyl stehen, R³ für H oder CH₃ steht und n eine ganze Zahl von 1 bis 10 ist.
und wobei sich die für die Komponenten (A) bis (D) angegebenen Gew.% jeweils auf die gesamte wässrige Lösung beziehen.

2. Wässrige Lösung einer Mischung nach Anspruch 1 enthaltend
(A) 10-40 Gew.% und insbesondere 20-30 Gew.% mindestens eines Sulfonat- und/oder Carboxylatgruppen enthaltenden aromatischen Formaldehyd-Kondensationsprodukts,
(B) 4-15 Gew.% und insbesondere 5-10 Gew.% mindestens einer aliphatischen Carbonsäure,
(C) 2-10 Gew.% und insbesondere 3-5 Gew.% mindestens einer aromatischen Sulfonsäure und
(D) 2-10 Gew.% und insbesondere 3-7 Gew.% mindestens eines Lösungsmitiels der Formel (I)
R¹O(CH₂CHR³O)ₙR², (I)
wobei R¹, R², R³ und n die in Anspruch 1 genannten Bedeutungen haben und sich die für die Komponenten (A) bis (D) angegebenen Gew.% jeweils auf die gesamte wässrige Lösung beziehen.

3. Wässrige Lösung nach Anspruch 1 oder 2, **dadurch gekennzeichnet, dass** die aromatischen Formaldehyd-Kondensationsprodukte (A) als kondensationsfähige aromatische Verbindungen Benzol- und/oder Naphthalinderivate eingesetzt werden, die einen oder mehrere, bevorzugt ein oder zwei Substituenten tragen, welche ausgewählt sind aus der Gruppe der C₁-C₄-Alkyl-, Hydroxy-, C₅-C₁₂-Cycloalkyl, C₁-C₄-Alkoxy-, C₁-C₄-Hydroxyalkoxy-, C₆-C₁₂-Aroxy-, C₇-C₁₃-Aralkoxy-, Carboxy-, C₁-C₆-Alkoxycarbonyl-, Sulfonat-, C₆-C₁₂-Arylsulfonyl- und C₆-C₁₂-Hydroxyarylsulfonyl-Reste.

4. Wässrige Lösung nach einem oder mehreren der Ansprüche 1-3, **dadurch gekennzeichnet, dass** die aromatischen Formaldehyd-Kondensationsprodukte (A) durch gemeinsame Kondensation von 4,4'-Dihydroxydiphenolsulfon und Phenolsulfonsäure und/oder Diphenylsulfonsäure und/oder Dihydroxydiphenylsulfonsäure und/oder Ditolylethersulfonsäure und/oder Naphthalinsulfonsäure und/oder Hydroxybenzoesäure mit Formaldehyd hergestellt werden.

5. Wässrige Lösung nach einem oder mehreren der Ansprüche 1-4, **dadurch gekennzeichnet, dass** die Formaldehyd-Kondensationsprodukte (A) durch gemeinsame Kondensation von a) 4,4'-Dihydroxydiphenolsulfon und b) Phenolsulfonsäure mit c) Formaldehyd im molaren Verhältnis a:b:c = 1 : (0,25-2,5): (0,75-3,5) hergestellt werden.

6. Wässrige Lösung nach einem oder mehreren der Ansprüche 1-5, **dadurch gekennzeichnet, dass** als aliphatische Carbonsäure (B) eine C₁-C₆-, bevorzugt eine C₁-C₃-Monocarbonsäure, insbesondere Essigsäure, verwendet wird.

7. Wässrige Lösung nach einem oder mehreren der Ansprüche 1-6, **dadurch gekennzeichnet, dass** es sich bei der aromatischen Sulfonsäure (C) um Benzolsulfonsäure, Toluolsulfonsäure, Phenolsulfonsäure, Aminobenzolsulfonsäure, Naphthalinsulfonsäure oder Benzoldisulfonsäure handelt.

8. Wässrige Lösung nach einem oder mehreren der Ansprüche 1-7, **dadurch gekennzeichnet, dass** im Lösungsmittel (D) R¹ und R² unabhängig voneinander für Wasserstoff, Methyl, Ethyl, n-Propyl, i-Propyl, n-Butyl, i-Butyl, tert. Butyl, n- oder iso-Pentyl, n- oder iso-Hexyl oder Acetat stehen, R³ für CH₃ steht und n gleich 1, 2 oder 3 ist.

9. Wässrige Lösung nach Anspruch 8, **dadurch gekennzeichnet, dass** im Lösungsmittel (D) R¹ für H steht, R² und R³ fiir Methyl stehen und n gleich 1 ist.

10. Verwendung der wässrigen Lösungen nach einem oder mehreren der Ansprüche 1-9 als Egalisiermittel beim Färben von Fasern oder daraus hergestellten Textilmaterialien, bevorzugt beim Färben von synthethischen Fasern oder daraus hergestellten Textilmaterialien mit anionischen Farbstoffen.

11. Verwendung der wässrigen Lösungen nach einem oder mehreren der Ansprüche 1-9 zur Verbesserung der Echtheiten von gefärbten Textilmaterialien, bevorzugt zur Nachbehandlung von mit anionischen und/oder kationischen Farbstoffen gefärbten Textilmaterialien, bevorzugt Polyamiden, insbesondere synthetischen Polyamiden.

12. Verwendung der wässrigen Lösungen nach einem oder mehreren der Ansprüche 1-9 als Hilfsmittel bei der Fleckfreiausrüstung von Textilmaterialien, bevorzugt von synthetischen Textilmaterialien und insbesondere von synthetischen Polyamid-Teppichen.

13. Verwendung der wässrigen Lösungen nach einem oder mehreren der Ansprüche 1-9 als Gerbstoffe für Leder.

14. Verwendung der wässrigen Lösungen nach einem oder mehreren der Ansprüche 1-9 als Dispergiermittel für wasserunlösliche Feststoffe, bevorzugt für Farbstoffe, Pigmente und Agrochemikalien.

## Claims

1. Aqueous solution of a mixture containing
(A) 5-50% by weight of at least one aromatic formaldehyde condensation product containing sulphonate and/or carboxylate groups,
(B) 2-30% by weight of at least one aliphatic carboxylic acid,
(C) 1-20% by weight of at least one aromatic sulphonic acid, and
(D) 1-15% by weight of at least one solvent of the formula (I)
R¹O(CH₂CHR³O)ₙ-R², (I)
where R¹ and R² are independently H, straight-chain or branched C₁-C₆-alkyl, phenyl or C₁-C₄-acyl, R³ is H or CH₃ and n is an integer from 1 to 10
and where the weight %ages indicated for the components (A) to (D) are each based on the entire aqueous solution.

2. Aqueous solution of a mixture according to Claim 1, containing
(A) 10-40% by weight and especially 20-30% by weight of at least one aromatic formaldehyde condensation product containing sulphonate and/or carboxylate groups,
(B) 4-15% by weight and especially 5-10% by weight of at least one aliphatic carboxylic acid,
(C) 2-10% by weight and especially 3-5% by weight of at least one aromatic sulphonic acid, and
(D) 2-10% by weight and especially 3-7% by weight of at least one solvent of the formula (I)
R¹O(CH₂CHR³O)ₙR², (I)
where R¹, R², R³ and n are each as defined in claim 1 and the weight %ages indicated for the components (A) to (D) are each based on the entire aqueous solution.

3. Aqueous solution according to Claim 1 or 2, **characterized in that** the aromatic formaldehyde condensation products (A) utilize as condensation-capable aromatic compounds benzene and/or naphthalene derivatives bearing one or more, preferably one or two, substituents selected from the group consisting of C₁-C₄-alkyl, hydroxyl, C₅-C₁₂-cycloalkyl, C₁-C₄-alkoxy, C₁-C₄-hydroxyalkoxy, C₆-C₁₂-aroxy, C₇-C₁₃-aralkoxy, carboxyl, C₁-C₆-alkoxycarbonyl, sulphonate, C₆-C₁₂-arylsulphonyl and C₆-C₁₂-hydroxyarylsulphonyl.

4. Aqueous solution according to one or more of Claims 1-3, **characterized in that** the aromatic formaldehyde condensation products (A) are prepared by conjoint condensation of 4,4'-dihydroxydiphenol sulphone and phenolsulphonic acid and/or biphenylsulphonic acid and/or dihydroxybiphenylsulphonic acid and/or oxyditolylsulphonic acid and/or naphthalenesulphonic acid and/or hydroxybenzoic acid with formaldehyde.

5. Aqueous solution according to one or more of Claims 1-4, **characterized in that** the formaldehyde condensation products (A) are prepared by conjoint condensation of a) 4,4'-dihydroxydiphenol sulphone and b) phenolsulphonic acid with c) formaldehyde in a molar ratio of a:b:c = 1 : (0.25-2.5): (0.75-3.5).

6. Aqueous solution according to one or more of Claims 1-5, **characterized in that** the aliphatic carboxylic acid (B) is a C₁-C₆- and preferably a C₁-C₃-monocarboxylic acid, especially acetic acid.

7. Aqueous solution according to one or more of Claims 1-6, **characterized in that** the aromatic sulphonic acid (C) is benzenesulphonic acid, toluenesulphonic acid, phenolsulphonic acid, aminobenzenesulphonic acid, naphthalenesulphonic acid or benzenedisulphonic acid.

8. Aqueous solution according to one or more of Claims 1-7, **characterized in that**, in the solvent (D), R¹ and R² are independently hydrogen, methyl, ethyl, n-propyl, i-propyl, n-butyl, i-butyl, tert-butyl, n- or iso-pentyl, n- or iso-hexyl or acetate, R³ is CH3 and n is 1, 2 or 3.

9. Aqueous solution according to Claim 8, **characterized in that**, in the solvent (D), R¹ is H, R² and R³ are each methyl and n is 1.

10. Use of the aqueous solutions according to one or more of Claims 1-9 as a levelling agent in the dyeing of fibres or textile materials produced therefrom, preferably in the dyeing of synthetic fibres or textile materials produced therefrom with anionic dyes.

11. Use of the aqueous solutions according to one or more of Claims 1-9 for improving the fastnesses of dyed textile materials, preferably for aftertreating anionically and/or cationically dyed textile materials, preferably polyamides, especially synthetic polyamides.

12. Use of the aqueous solutions according to one or more of Claims 1-9 as an auxiliary in the stain resist finishing of textile materials, preferably of synthetic textile materials and especially of synthetic polyamide carpets.

13. Use of the aqueous solutions according to one or more of Claims 1-9 as tanning agents for leather.

14. Use of the aqueous solutions according to one or more of Claims 1-9 as a dispersant for water-insoluble solids, preferably for dyes, pigments and agrichemicals.

## Revendications

1. Solution aqueuse d'un mélange contenant
(A) 5-50 % en masse d'au moins un produit de condensation aromatique du formaldéhyde contenant des groupes sulfonates et/ou carboxylates,
(B) 2-30 % en masse d'au moins un acide carboxylique aliphatique,
(C) 1-20 % en masse d'au moins un acide sulfonique aromatique et
(D) 1-15 % en masse d'au moins un solvant de formule (I)
R¹O(CH₂CHR³O)ₙ-R² (I)
où R¹ et R² représentent indépendamment l'un de l'autre H, alkyle en C₁-C₆ linéaire ou ramifié, phényle ou acyle en C₁-C₄, R³ représente H ou CH₃ et n est un nombre entier de 1 à 10
et où les % en masse indiqués pour les composants (A) à (D) sont rapportés à chaque fois à la solution aqueuse totale.

2. Solution aqueuse d'un mélange selon la revendication 1 contenant
(A) 10-40 % en masse et en particulier 20-30 % en masse d'au moins un produit de condensation aromatique du formaldéhyde contenant des groupes sulfonates et/ou carboxylates,
(B) 4-15 % en masse et en particulier 5-10 % en masse d'au moins un acide carboxylique aliphatique,
(C) 2-10 % en masse et en particulier 3-5 % en masse d'au moins un acide sulfonique aromatique et
(D) 2-10 % en masse et en particulier 3-7 % en masse d'au moins un solvant de formule (I)
R¹O(CH₂CHR³O)ₙR² (I)
où R¹, R², R³ et n ont les significations citées dans la revendication 1 et les % en masse indiqués pour les composants (A) à (D) sont rapportés à chaque fois à la solution aqueuse totale.

3. Solution aqueuse selon la revendication 1 ou 2 **caractérisée en ce que** les produits de condensation aromatiques du formaldéhyde (A) sont utilisés comme composés aromatiques susceptibles de condensation de dérivés du benzène et/ou du naphtalène qui portent un ou plusieurs, de préférence un ou deux substituants qui sont choisis dans le groupe des restes alkyle en C₁-C₄, hydroxyle, cycloalkyle en C₅-C₁₂, alcoxy en C₁-C₄, hydroxyalcoxy en C₁-C₄, aryloxy en C₆-C₁₂, aralcoxy en C₇-C₁₃, carboxyle, alcoxy en C₁-C₆-carbonyle, sulfonate, arylsulfonyle en C₆-C₁₂ et hydroxy-arylsulfonyle en C₆-C₁₂.

4. Solution aqueuse selon une ou plusieurs des revendications 1 à 3 **caractérisée en ce que** les produits de condensation aromatiques du formaldéhyde (A) sont préparés par condensation commune de la 4,4'-dihydroxydiphénolsulfone et de l'acide phénolsulfonique et/ou de l'acide diphénylsulfonique et/ou de l'acide dihydroxydiphénylsulfonique et/ou de l'acide ditolyléthersulfonique et/ou de l'acide naphtalènesulfonique et/ou de l'acide hydroxybenzoïque avec le formaldéhyde.

5. Solution aqueuse selon une ou plusieurs des revendications 1 à 4 **caractérisée en ce que** les produits de condensation du formaldéhyde (A) sont préparés par condensation commune a) de la 4,4'-dihydroxy-diphénoisulfone et b) de l'acide phénolsulfonique avec c) le formaldéhyde dans le rapport molaire a:b:c = 1 : (0,25-2,5) : (0,75-3,5).

6. Solution aqueuse selon une ou plusieurs des revendications 1 à 5 **caractérisée en ce qu'**un acide monocarboxylique en C₁-C₆, de préférence en C₁-C₃, en particulier l'acide acétique, est utilisé comme acide carboxylique aliphatique (B).

7. Solution aqueuse selon une ou plusieurs des revendications 1 à 6 **caractérisée en ce que** l'acide sulfonique aromatique (C) est l'acide benzènesulfonique, l'acide toluènesulfonique, l'acide phénolsulfonique, l'acide aminobenzènesulfonique, l'acide naphtalènesulfonique ou l'acide benzènedisulfonique.

8. Solution aqueuse selon une ou plusieurs des revendications 1 à 7 **caractérisée en ce que**, dans le solvant (D), R¹ et R² représentent indépendamment l'un de l'autre l'hydrogène, méthyle, éthyle, n-propyle, i-propyle, n-butyle, i-butyle, tert-butyle, n- ou isopentyle, n- ou isohexyle ou acétate, R³ représente CH₃ et n est égal à 1, 2 ou 3.

9. Solution aqueuse selon la revendication 8 **caractérisée en ce que**, dans le solvant (D), R¹ représente H, R² et R³ représentent méthyle et n est égal à 1.

10. Utilisation des solutions aqueuses selon une ou plusieurs des revendications 1 à 9 comme agent d'égalisation lors de la teinture de fibres ou de matières textiles produites à partir de celles-ci, de préférence lors de la teinture de fibres synthétiques ou de matières textiles produites à partir de celles-ci avec des colorants anioniques.

11. Utilisation des solutions aqueuses selon une ou plusieurs des revendications 1 à 9 pour améliorer les solidités de matières textiles teintes, de préférence pour le post-traitement de matières textiles teintes avec des colorants anioniques et/ou cationiques, de préférence des polyamides, en particulier des polyamides synthétiques.

12. Utilisation des solutions aqueuses selon une ou plusieurs des revendications 1 à 9 comme adjuvant lors de l'apprêt sans taches de matières textiles, de préférence de matières textiles synthétiques et en particulier de tapis en polyamide synthétique.

13. Utilisation des solutions aqueuses selon une ou plusieurs des revendications 1 à 9 comme matières tannantes pour le cuir.

14. Utilisation des solutions aqueuses selon une ou plusieurs des revendications 1 à 9 comme dispersant pour solides insolubles dans l'eau, de préférence pour colorants, pigments et produits agrochimiques.
